# DEMANDE DE BREVET EUROPEEN

(11) **EP 0 994 633 A1**
(43) Date de publication de la demande: **19.04.2000**
(21) Numéro de dépôt: 99402453.7
(22) Date de dépôt: 07.10.1999
(51) Int. Cl.: H04Q 7/36

(54) **Procédé de communication en mode paquets dans une cellule à antennes distribuées**

(30) Priorité: 12.10.1998 FR 9812732
(71) Demandeur: ALCATEL, 75008 Paris (FR)
(72) Inventeur: Dartois, Luc, 78955 Carrieres Sous Poissy (FR)
(74) Mandataire: El Manouni, Josiane

(57) **Abrégé**

L'invention concerne un procédé de communication en mode paquets dans une cellule, entre une station de base comprenant une pluralité de points rayonnants (2ᵢ) et au moins un mobile (3ᵢ). Elle propose d'affecter un point rayonnant à un mobile, et d'utiliser ce point rayonnant pour les communications vers ledit mobile. L'affectation d'un point rayonnant à un mobile peut s'effectuer en écoutant les différents mobiles sur tous les points rayonnants, en comparant les intensités des signaux reçus, et en affectant à un mobile le point rayonnant pour lequel l'intensité des signaux émis par le mobile est la plus élevée.

L'invention est adaptée à un accès des mobiles à un serveur. Elle permet de maximiser le débit et de minimiser le délai d'acheminement statistique dans une cellule à points rayonnants ou antennes distribuées.

L'invention concerne aussi une station de base permettant la mise en oeuvre de l'invention.

## Description

La présente invention concerne le domaine des communications dans les systèmes de radio-communications cellulaires ou réseaux de télécommunications mobiles. Elle concerne plus particulièrement les communications en mode paquets dans une cellule comprenant une pluralité de points rayonnants ou antennes.

De façon connue en soi, de tels réseaux sont formés de cellules, comprenant chacune une station de base chargée d'assurer les communications avec les mobiles présents dans la cellule. Diverses normes ont déjà été définies pour les systèmes de télécommunications terrestres à terminaux mobiles, notamment les normes GSM 900 ou DCS 1800. De telles normes comprennent une pluralité de couches; par exemple les couches supérieures de la norme GSM sont des couches de contrôle de cellule (acronyme CC pour les termes anglais "call control") et de gestion de la mobilité (acronyme MM pour les termes anglais "mobility management"). Toujours pour la norme GSM, chaque station terrestre (BTS pour les termes anglais "base transmission subsystem') émet dans une cellule, où elle est identifiée par une voie balise (acronyme BCCH pour les termes anglais "broadcast control channel").

L'invention concerne plus particulièrement la transmission de données paquets dans les cellules présentant une pluralité d'antennes ou points rayonnants. De telles cellules, appelées aussi cellules à antennes distribuées ou picocellules sont constituées d'un nombre important d'antennes distribuées sur une surface réduite, comme par exemple un campus ou des bâtiments, et reliées à un contrôleur radio assurant la fonctionnalité d'une station de base logique de grande capacité. Une telle cellule à antennes distribuées peut typiquement servir plus de mille mobiles, avec un taux d'utilisation de 10%.

Dans la suite de la description, l'invention est décrite en référence au cas particulier du réseau mobile GSM, et du service GPRS (acronyme de l'anglais "General Packet Radio Service"); elle n'est pas limitée à cet exemple particulier.

Pour de telles cellules présentant une pluralité d'antennes distribués, se pose le problème de l'optimisation de la transmission de données, et notamment dans le cas du GSM, de la transmission de données en mode paquets. Cette optimisation a pour but de maximiser le débit et de minimiser le délai d'acheminement, statistiquement.

Pour résoudre ce problème, l'ETSI (European Telecommunications Standard Institute) propose dans les recommandations GSM ETR 03.60, 03.64 et 04.60 la solution suivante:
- dans le sens descendant, de la station de base vers les mobiles, les paquets sont envoyés en série, et sont diffusés dans toute la cellule, indépendamment de son architecture et du nombre d'antennes qu'elle comprend;
- dans le sens montant, depuis un mobile vers la station de base, un protocole gère les temps de parole des mobiles, de façon à éviter toute collision de paquets, et ceci au prix là encore d'une stricte mise en série des paquets provenant de l'ensemble des mobiles de la cellule.

Cette solution présente les inconvénients suivants. La solution est limitée en débit. En effet, la capacité est limité à une porteuse; dans le cas du GSM, la capacité est limitée à huit fenêtres temporelles (en anglais "time slots") pour l'ensemble de la cellule, et fournit donc un support de transmission de 8*9,6 ou 8*14,4 kbits/s en fonction de la nature de la communication - données ou paroles. En outre, la solution de ce fait est mal adaptée à servir un grand nombre de mobiles, comme c'est typiquement le cas pour une cellule à antennes distribuées. La solution proposée dans l'art antérieur induit donc des délais d'acheminement statistiques importants. Enfin, ces problèmes sont d'autant plus sensibles que l'utilisation de telles picocellules dans des zones de bureaux ou des campus génère du traffic avec une proportion élevée de services de données; pour de tels services, le débit demandé est important, et les délais d'acheminement doivent être courts.

La demande de brevet française déposée le 08 septembre 1997 sous le numéro 9711123, avec pour titre "Station de base contrôlant les communications mises en oeuvre dans une cellule d'un réseau de radiocommunication cellulaire et numérique et procédé de contrôle correspondant", qui est publiée après la date de dépôt de la présente demande propose dans une cellule avec une pluralité de relais d'affecter sélectivement à chaque communication un jeu d'au moins deux relais, en liaison montante ou en liaison descendante. Cette demande propose de choisir les relais affectés à une communication en fonction d'une information relative à la qualité de la communication montante depuis un mobile; cette information peut comprendre, pour la communication, le rapport signal à interférences, le rapport signal à bruit, la puissance reçue par le relais, le taux d'erreur binaire brut ou après décodage, le taux de perte de trame, ou une indication de positionnement géographique.

L'invention propose une solution pour la transmission de données dans une cellule à antennes distribuées, qui permette statistiquement d'augmenter le débit, et de diminuer le délai d'acheminement. Elle s'applique tout particulièrement à la transmission de données paquets. L'invention permet un accroissement du débit des paquets, tant en liaison descendante que le cas échéant en liaison montante; elle permet ainsi d'augmenter le nombre de mobile en trafic simultané en mode paquets, et ou d'augmenter le débit et donc de diminuer le temps moyen de transmission par mobile. L'invention est particulièrement avantageuse à mettre en oeuvre en liaison descendante pour permettre un accès à plus haut débit à des serveurs. Enfin, l'invention peut être mise en oeuvre au niveau de la cellule à antennes distribuées, de façon transparente pour le reste du réseau mobile.

Plus précisément, l'invention propose un procédé de communications dans une cellule, entre une station de base comprenant une pluralité de points rayonnants et au moins un mobile, comprenant :
- l'affectation d'un point rayonnant à un mobile, et
- l'utilisation de ce point rayonnant pour les communications vers ledit mobile

Avantageusement, la communication est une communication en mode paquets.

Dans un mode de réalisation, l'affectation d'un point rayonnant à un mobile comprend les étapes de
- écoute des différents mobiles sur tous les points rayonnants;
- comparaison des intensités des signaux reçus par les différents points rayonnants; et
- affectation à un mobile du point rayonnant pour lequel l'intensité des signaux émis par le mobile est la plus élevée.

Dans un mode de réalisation, l'affectation s'effectue en dévut de communication lors de la demande d'accès.

Dans un autre mode de réalisation, chaque point rayonnant comprend au moins un récepteur mono-porteuse agile en fréquence, et l'étape d'écoute des mobiles comprend le balayage des fréquences des porteuses possibles.

Dans encore un autre mode de réalisation, chaque point rayonnant comprend un récepteur numérique large bande, et l'étape d'écoute comprend l'analyse spectrale des signaux reçus.

Dans ces deux derniers cas, l'étape d'écoute et l'étape d'affectation sont de préférence répétées en cours de communication.

Avantageusement, le procédé comprend en outre la réception par ledit point rayonnant des paquets provenant du dit mobile.

Dans un mode de réalisation, le procédé comprend la réception par un point rayonnant de paquets mis en série provenant des mobiles auxquels est affecté le dit point rayonnant, et l'assemblage des paquets reçus par lesdits points rayonnants.

L'invention concerne aussi une station de base pour cellule d'un réseau de télécommunications, la dite cellule comprenant une pluralité de points rayonnants, et des moyens d'affectation à un mobile se trouvant dans la cellule d'un des dits points rayonnants pour les communications vers le dit mobile.

Avantageusement, les communications sont des communications en mode paquet.

Dans un mode de réalisation, les moyens d'affectation comprennent :
- des moyens d'écoute des différents mobiles sur tous les points rayonnants;
- des moyens de comparaison des intensités des signaux reçus par les différents points rayonnants pour affecter à un mobile le point rayonnant pour lequel l'intensité des signaux émis par le mobile est la plus élevée.

Avantageusement, la station de base comprend des moyens de démultiplexage des paquets reçus depuis le réseau de télécommunications, aiguillant dynamiquement les paquets destinés à un mobile vers le point rayonnant affecté à ce mobile.

De préférence, la station de base comprend aussi une pluralité de moyens gestionnaires de point rayonnant, assurant pour les communications de chaque point rayonnant la gestion et l'allocation des ressources radio, et recevant depuis les moyens de démultiplexage les dits paquets.

Dans un mode de réalisation, la station de base comprend des moyens de multiplexage des paquets reçus depuis les points rayonnants avant leur transmission au réseau de télécommunications.

De préférence, les moyens de multiplexage reçoivent les paquets depuis les moyens gestionnaires de point rayonnant.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique d'une cellule à antennes distribuées;
- figure 2 une représentation schématique plus détaillée de la cellule de la figure 1.

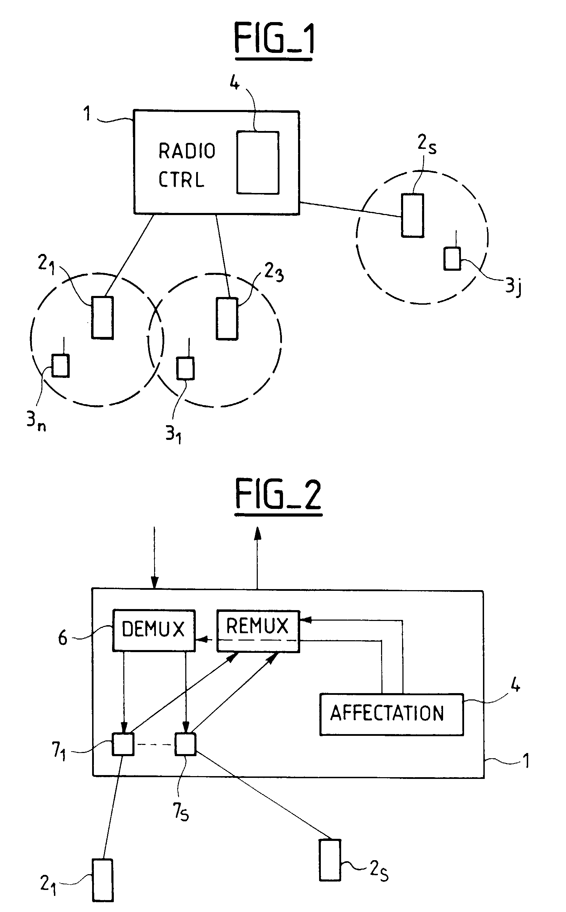

La figure 1 montre une représentation schématique d'une cellules à antennes distribuées; la cellule comporte un radiocontrôleur représenté schématiquement par la référence 1, et S antennes ou points rayonnants déportés ou distribués 2₁ à 2_{S}, S étant un entier naturel; S présente typiquement une valeur de 2 à 30. Les points rayonnants permettent d'assurer une couverture radio quasi-uniforme dans la cellule, par exemple dans le ou les bâtiments composant la cellule. Chacun des points rayonnants 2ᵢ peut contenir une partie des fonctionnalités radio, et est capable d'émettre et de recevoir simultanément plusieurs porteuses, en saut de fréquence. Le partage des fonctionnalités entre le radiocontrôleur 1 et les antennes déportées 2ᵢ s'effectue typiquement au niveau de la couche 1 du GSM, et son implémentation exacte est sans effet sur la mise en oeuvre de l'invention. Dans l'exemple du GSM, tous les points rayonnants émettent de façon synchrone; ils émettent simultanément, et écoutent la porteuse BCCH. En outre, les points rayonnants peuvent avoir une capacité de trafic d'au moins une porteuse en saut de fréquence.

On a en outre représenté sur la figure 1 des mobiles 3₁ à 3ₙ présents dans la cellule à antennes distribuées, et en traits interrompus la couverture des différents points rayonnants.

L'invention propose d'identifier le meilleur point rayonnant pour au moins une partie des mobiles, de sorte à utiliser les différents points rayonnants pour envoyer simultanément des paquets différents à des mobiles différents, situés sous des points rayonnants différents. L'invention permet ainsi d'augmenter statistiquement la capacité de transmission des paquets, en tirant bénéfice du parallélisme dans la transmission; elle s'applique de préférence dans le sens descendant, mais peut être utilisée aussi en liaison montante. L'augmentation statistique peut être en rapport du nombre de points rayonnants, typiquement dans le cas de mobiles également distribués dans la cellule.

Pour cela l'invention propose de prévoir dans la cellule à antennes distribuées des moyens d'affectation d'antennes aux mobiles, de sorte à pouvoir envoyer et/ou recevoir simultanément des paquets différents à des mobiles différents situés sous des antennes différentes. Une solution pour affecter une antenne à un mobile consiste à identifier celle des antennes distribuées qui pour un mobile permet d'assurer la meilleure qualité de transmission vers ou depuis le mobile. Cette "meilleure antenne" peut par exemple être choisie en début de communication entrante ou sortante à partir de la demande d'accès, comme expliqué dans la suite. On peut aussi déterminer la "meilleure antenne" en cours de communication.

Ainsi, à titre d'exemple, dans le cas de la figure 1, le meilleur point rayonnant pour le mobile 3₁ est le point 2₃, à proximité immédiate duquel se trouve le mobile. Les moyens d'affectation pourraient ainsi affecter le point rayonnant 2₃ au mobile 3₁, ou affecter le mobile 3₁ au point rayonnant 2₃.

Dans le mode de réalisation de la figure 1, les moyens d'affectation sont représentés dans le radiocontrôleur 1, et sont référencés 4. Les moyens d'affectation peuvent fonctionner par écoute et suivi des mobiles. Dans le mode de réalisation dans lequel on utilise la demande d'accès pour affecter une antenne au mobile, les paquets d'accès sont émis par les mobiles sur la porteuse BCCH à fréquence fixe; dans ce cas, le récepteur BCCH de la cellule peut suffire pour analyser les paquets d'accès reçus sur les divers points rayonnants, et les moyens d'affectation peuvent utiliser les informations provenant du récepteur BCCH pour identifier le meilleur point rayonnant; par exemple en fonction de l'intensité du signal reçu sur chaque point rayonnant, ou avec l'une ou l'autre des méthodes proposées dans la demande de brevet 9711123 précitée.

Dans le mode de réalisation dans lequel on détermine en cours de communication la meilleure antenne, l'écoute des mobiles sur les points rayonnants peut s'effectuer de diverses manières, en fonction de la technologie radio utilisée; on ne donne ici que deux exemples. Si un point rayonnant comprend un nombre limité de récepteurs mono-porteuse agile en fréquence, on peut utiliser une fenêtre temporelle de l'un des récepteurs comme organe d'écoute; dans ce cas, on peut faire balayer successivement à ce récepteur l'ensemble des fréquences utilisées dans la cellule. On parvient de la sorte à écouter les paquets d'accès émis par les différents mobiles, depuis l'ensemble des points rayonnants. L'écoute des différentes porteuses s'effectue sur un nombre de fenêtres temporelles égales au nombre de porteuses possibles. Dans un cas typique, on peut utiliser à l'intérieur de la cellule à antennes distribuées m = 4 à 63 fréquences.

Si au contraire chaque point rayonnant comprend un récepteur large bande, couvrant toutes les fréquences simultanément, on peut procéder à une mesure de champ simultanée à chaque paquet sur toutes les fréquences de la bande. Cette solution est particulièrement avantageuse dans le cas d'une transmission en mode paquets; en effet, dans un tel mode, les paquets sont émis par les mobiles pendant des durées courtes, et à des instants imprévisibles. L'utilisation d'un récepteur large bande évite de préjuger de l'instant d'émission des paquets, ou plus exactement, permet de recevoir les paquets quels que soient l'instant d'émission et la durée des paquets.

On peut pour cela utiliser les principes de l'analyse spectrale; dans un mode de réalisation, l'invention propose d'utiliser un banc de filtres numériques, qui fournissent une mesure de l'intensité du signal aux différentes fréquences des porteuses utilisables par les mobiles. Dans un autre mode de réalisation, l'invention propose d'appliquer une transformation de Fourier aux signaux reçus sur les différents points rayonnants. On peut ensuite simplement déterminer l'intensité du signal reçu par chacun des points rayonnants aux différentes fréquences de porteuse utilisables dans la cellule. Dans le cas de récepteurs larges bandes, on peut ainsi au rythme des paquets mesurer les signaux reçus depuis les mobiles par les différents points rayonnants. La mesure, soit par filtres numériques, soit par transformée de Fourier, peut s'effectuer sans récepteur dédié, ce qui permet d'éviter d'occuper une fenêtre temporelle ou de perdre de la capacité de réception.

Quel que soit le mode de réalisation, l'écoute des différents mobiles depuis les points rayonnant fournit des mesures du champ reçu sur tous les points rayonnants. Les moyens d'affectation peuvent ainsi établir une collection des différents signaux reçus, et choisir pour un fréquence donnée, i. e. pour un mobile donné, le point rayonnant pour lequel l'intensité est maximale. On peut ainsi déterminer, pour chaque mobile, quel est le point rayonnant qui reçoit le signal avec l'intensité la plus élevée. On peut de la sorte affecter à chaque mobile une "meilleure antenne", qui est celle qui reçoit le mieux le mobile, et qui assure a priori la meilleure qualité de transmission pour la communication. La décision d'affectation peut être effectuée lors de la demande d'accès au service, comme décrit plus haut, où encore lors de toute émission par un mobile.

Dans ce dernier cas, l'invention permet un suivi dynamique des mobiles, de sorte à permettre un changement de point rayonnant pour suivre un mobile en déplacement dans la cellule; la meilleure antenne pour chaque mobile peut être déterminée à chaque émission par le mobile, et peut varier dans le temps de sorte à assurer un suivi du mobile, en lui affectant à tout instant sur la liaison descendante un point rayonnant unique.

On peut aussi pour affecter un point rayonnant à un mobile utiliser les techniques décrites dans la demande de brevet français 9711123 précitée. Toutefois, une implémentation des mesures de niveau et d'interférences par récepteur large bande, comme décrit plus haut, est la solution la mieux adaptée à une transmission en mode paquets; elle permet en outre d'assurer un suivi des mobiles.

Une fois qu'un point rayonnant est affecté à chaque mobile, l'invention propose d'utiliser ce point rayonnant pour la communication en liaison descendante, autrement dit d'envoyer simultanément des paquets différents à ces mobiles différents situés sous des antennes différentes. Des modes de réalisation en liaison descendante, puis en liaison descendante et en liaison montante sont décrits dans la suite.

En liaison descendante, l'invention propose de répartir les paquets à émettre vers les différents points rayonnants, et pour un paquet donné, de n'émettre le paquet que sur le point rayonnant affecté au mobile auquel est destiné le paquet. Pour cela, on peut prévoir dans le radiocontrôleur des moyens de démultiplexage pour démultiplexer les paquets reçus sur la cellule depuis le réseau mobile; les moyens de démultiplexage reçoivent depuis le réseau les paquets destinés aux mobiles de la cellule, et répartissent ces paquets vers les différents points rayonnants, en fonction des mobiles auxquels ils sont affectés. En d'autres termes, chaque paquet est envoyé vers le point rayonnant qui est à cet instant la "meilleure antenne" pour le mobile auquel le paquet est destiné. Dans ce mode de réalisation, il est ainsi possible de n'émettre un paquet que depuis le point rayonnant couvrant à un instant le mobile auquel le paquet est destiné.

Les moyens de démultiplexage peuvent simplement comprendre des moyens de lecture de l'en-tête d'un paquet. La lecture de l'en-tête permet d'identifier le mobile destinataire du paquet, par lecture de l'adresse logique du mobile destinataire. Grâce aux moyens d'affectation, le point rayonnant vers lequel le paquet doit être envoyé peut être déterminé dynamiquement, et les moyens de multiplexage peuvent aiguiller dynamiquement chaque paquet vers le point rayonnant qui lui est affecté.

Outre les moyens de démultiplexage, le radiocontrôleur comprend avantageusement des moyens gestionnaires d'antenne, qui assurent pour chaque antenne ou point rayonnant, la gestion et l'allocation des ressources radio, pour les différentes porteuses utilisées par chaque antenne. Les moyens gestionnaires d'antenne reçoivent pour chaque antenne les paquets à émettre par l'antenne, et destinés aux mobiles couverts par l'antenne; pour chaque antenne ou point rayonnant, le multiplexage des paquets peut s'effectuer localement en suivant le protocole GPRS mentionné plus haut. On assure de la sorte que les règles de priorité sont aussi respectées dans la cellule où l'invention est mise en oeuvre: en effet, dans une fenêtre temporelle, les paquets sont émis simultanément sur les différents points rayonnants de la cellule, et sur un point rayonnant donné, les règles de priorité sont respectées.

Avantageusement, les moyens de démultiplexage peuvent aussi gérer le suivi dynamique des mobiles. Dans ce cas, ils reçoivent depuis les moyens d'affectation les informations relatives à la meilleure antenne pour chaque mobile, et en cas de changement de cette antenne pour un mobile donné, peuvent transmettre à la nouvelle antenne les éléments relatifs aux paramètres et ressources radios affectées à un mobile; ces paramètres peuvent être transmis depuis les moyens gestionnaires d'antennes de l'antenne précédente, ou peuvent aussi être modifiés. On assure ainsi un suivi des mobiles en liaison descendante en mode paquets, en permettant au mobile de bouger dans la cellule, et de changer de point rayonnant.

Cette utilisation d'une antenne unique en mode paquets en liaison descendante est bien adaptée à une utilisation classique de la communication pour un accès à un serveur. Dans un tel cas, le débit sur la liaison descendante est généralement beaucoup plus important que le débit sur la liaison montante. On peut grâce à l'invention atteindre un débit en liaison descendante qui peut augmenter en proportion du nombre de points rayonnants dans la cellule.

En liaison montante, on peut utiliser les techniques classiques de GPRS mentionnées plus haut; dans ce cas, les mobiles de la cellule émettent tous sur la même fenêtre temporelle, de sorte qu'un paquet est reçu par fenêtre temporelle sur toute la cellule. Cette solution ne permet pas d'augmenter la capacité en liaison montante; elle est toutefois bien adaptée à des accès des terminaux à des serveurs, avec comme indiqué ci-dessus un débit plus important en liaison descendante qu'en liaison montante.

Il est aussi possible, pour la liaison montante, d'affecter à chaque mobile une antenne ou point rayonnant dédié. Dans ce cas, chaque point rayonnant reçoit des paquets émis par les mobiles situés sous sa couverture, et les transmet vers le radiocontrôleur. Les moyens gestionnaires d'antenne peuvent alors démoduler et décoder les paquets reçus sous chaque point rayonnant; les paquets peuvent ensuite être transmis à des moyens de multiplexage; ceux-ci assemblent les paquets, et les transmettent vers le réseau mobile. On arrive de la sorte à transmettre vers le réseau mobile les différents paquets reçus sur les points rayonnants distribués. Par rapport à la solution de l'art antérieur, on évite la mise en série des paquets au niveau de l'ensemble de la cellule; pour un point rayonnant, les paquets peuvent être mis en série comme proposé dans la solution de l'art antérieur.

Ainsi, l'affectation d'une antenne selon l'invention peut être utilisée non seulement en liaison descendante, mais aussi en liaison montante et en liaison descendante. La figure 2 montre une représentation schématique plus détaillée de la cellule de la figure 1, avec différents moyens utilisables selon l'invention. On reconnaît sur la figure 2, outre les éléments décrits en référence à la figure 1, les moyens de démultiplexage 6 recevant depuis le réseau les paquets destinés à la cellule; les paquets démultiplexés sont transmis aux différents moyens gestionnaires d'antenne 7₁ à 7_{S}, de sorte à être émis sur le point rayonnant approprié. Sur la liaison montante, les paquets reçus sur un point rayonnant 2ᵢ sont transmis aux moyens gestionnaires d'antenne correspondants, et aux moyens de multiplexage 8, de sorte à être envoyés vers le réseau mobile.

L'invention, qu'elle soit mise en oeuvre sur la liaison descendante ou sur les liaisons montante et descendante, est transparente pour le réseau en dehors de la cellule: les paquets transmis depuis le réseau sont démultiplexés dans la cellule et les paquets provenant de la cellule sont multiplexés avant d'être transmis vers le réseau.

Lorsqu'elle est mise en oeuvre en liaison descendante, l'invention permet d'augmenter le débit à l'interface réseau par fenêtre temporelle, dans une proportion qui peut atteindre le nombre de points rayonnants dans la cellule. Il en est de même le cas échéant en liaison montante.

Bien entendu, la présente invention n'est pas limitée aux exemples et modes de réalisation décrits et représentés, mais elle est susceptible de nombreuses variantes accessibles à l'homme de l'art. On a ainsi décrit le cas où les moyens d'identification de la cellule permettent d'identifier pour un mobile une meilleure antenne. On pourrait aussi le cas échéant utiliser non pas une mais deux antennes.

Il est aussi clair que l'invention n'est pas limitée au mode de réalisation préféré dans lequel les moyens d'affectation sont centraux et localisés dans le radiocontrôleur; de même que le choix du partage fonctionnel entre le radiocontrôleur et les points rayonnants, le partage fonctionnel des moyens d'affectation ou des moyens de démultiplexage ou de multiplexage entre le radiocontrôleur et les points rayonnants est sans incidence sur le fonctionnement de l'invention. En outre, le partage fonctionnel des ressources radio peut être partagé entre le radiocontrôleur et un contrôleur de station de base (BSC ou "base station controller" en langue anglaise) gérant plusieurs stations de base (BTS).

## Revendications

1. Un procédé de communications dans une cellule, entre une station de base comprenant une pluralité de points rayonnants (2ᵢ) et au moins un mobile (3ⱼ), comprenant :
- l'affectation d'un point rayonnant à un mobile, et
- l'émission depuis ce point rayonnant des communications vers ledit mobile.

2. Le procédé selon la revendication 1, caractérisé en ce que la communication est une communication en mode paquets.

3. Le procédé selon la revendication 1 ou 2, caractérisé en ce que l'affectation d'un point rayonnant à un mobile comprend les étapes de
- écoute des différents mobiles sur tous les points rayonnants;
- comparaison des intensités des signaux reçus par les différents points rayonnants; et
- affectation à un mobile du point rayonnant pour lequel l'intensité des signaux émis par le mobile est la plus élevée.

4. Le procédé selon la revendication 3, caractérisé en ce que l'affectation s'effectue en dévut de communication lors de la demande d'accès.

5. Le procédé selon la revendication 3, caractérisé en ce que chaque point rayonnant comprend au moins un récepteur mono-porteuse agile en fréquence, et en ce que l'étape d'écoute des mobiles comprend le balayage des fréquences des porteuses possibles.

6. Le procédé selon la revendication 3, caractérisé en ce que chaque point rayonnant comprend un récepteur numérique large bande, et en ce que l'étape d'écoute comprend l'analyse spectrale des signaux reçus.

7. Le procédé selon la revendication 3 ou 4, caractérisé en ce que l'étape d'écoute et l'étape d'affectation sont répétées en cours de communication.

8. Le procédé selon l'une des revendications 1 à 7, caractérisé en ce qu'il comprend en outre la réception par le point rayonnant des communications provenant du dit mobile

9. Le procédé selon la revendication 8, caractérisé en ce qu'il comprend la réception par un point rayonnant de paquets mis en série provenant des mobiles auxquels est affecté le dit point rayonnant, et l'assemblage des paquets reçus par lesdits points rayonnants.

10. Une station de base pour une cellule d'un réseau de télécommunications, la dite cellule comprenant une pluralité de points rayonnants (2ᵢ), et des moyens d'affectation (4) à un mobile (3ⱼ) se trouvant dans la cellule d'un des dits points rayonnants pour les communications vers le dit mobile.

11. La station de base selon la revendication 10, caractérisée en ce que les dites communications sont des communications en mode paquet.

12. La station de base selon la revendication 10 ou 11, caractérisée en ce que les moyens d'affectation comprennent :
- des moyens d'écoute des différents mobiles sur tous les points rayonnants;
- des moyens de comparaison des intensités des signaux reçus par les différents points rayonnants pour affecter à un mobile le point rayonnant pour lequel l'intensité des signaux émis par le mobile est la plus élevée.

13. La station de base selon la revendication 10, 11 ou 12, caractérisée en ce qu'elle comprend des moyens de démultiplexage (6) des paquets reçus depuis le réseau de télécommunications, aiguillant dynamiquement les paquets destinés à un mobile (3ⱼ) vers le point rayonnant (2ᵢ) affecté à ce mobile.

14. La station de base selon la revendication 13, caractérisée en ce qu'elle comprend une pluralité de moyens (7₁ - 7_{S}) gestionnaires de point rayonnant, assurant pour les communications de chaque point rayonnant la gestion et l'allocation des ressources radio, et recevant depuis les moyens de démultiplexage les dits paquets.

15. La station de base selon l'une des revendications 10 à 14, caractérisée en ce qu'elle comprend des moyens de multiplexage des paquets reçus depuis les points rayonnants avant leur transmission au réseau de télécommunications.

16. La station de base selon les revendications 14 et 15, caractérisée en ce que les moyens de multiplexage reçoivent les paquets depuis les moyens (7₁ - 7_{S}) gestionnaires de point rayonnant.
